# EUROPÄISCHE PATENTSCHRIFT

(11) **EP 2 121 488 B1**
(45) Veröffentlichungstag und Bekanntmachung des Hinweises auf die Patenterteilung: **19.05.2010**
(21) Anmeldenummer: 08707742.6
(22) Anmeldetag: 15.02.2008
(51) Int. Cl.: B65G 19/02, B65G 47/29, B65G 47/88

(54) **SEPARATOR UND DAMIT AUSGESTATTETE HÄNGEFÖRDEREINRICHTUNG**
SEPARATOR AND SUSPENDED CONVEYING DEVICE EQUIPPED THEREWITH
SEPARATEUR ET CONVOYEUR SUSPENDU EQUIPE DE CE SEPARATEUR

(30) Priorität: 16.02.2007 DE 102007007834
(43) Veröffentlichungstag der Anmeldung: 25.11.2009
(73) Patentinhaber: RSL Logistik GmbH & Co. KG, 86899 Landsberg (DE)
(72) Erfinder: BERGEMANN, Horst, 86899 Landsberg am Lech (DE); SCHÖNENBERGER, Rolf, 86899 Landsberg am Lech (DE)
(74) Vertreter: Tiesmeyer, Johannes
(86) Internationale Anmeldenummer: PCT/EP2008/001181
(87) Internationale Veröffentlichungsnummer: WO 2008/098782

(56) Entgegenhaltungen:
- EP-A- 1 215 142
- DE-C1- 19 681 063
- GB-A- 2 175 887
- US-A- 3 105 610

## Beschreibung

Die Erfindung betrifft eine Separatoreinrichtung zur Freigabe von Fördergutträgern zur Bewegung längs einer Förderstrecke in einer Fördereinrichtung, in welcher die Fördergutträger an Führungsschienen längs der Förderstrecke geführt sind, umfassend Barriereelemente, die in einem Abstand längs der Förderstrecke voneinander z. B. an einer Fördergutträger-Sammelstelle angeordnet - und in den Weg der Fördergutträger hinein- und aus dem Weg der Fördergutträger herausbewegbar sind, um den jeweiligen in der Fördergutträger-Sammelstelle in Förderrichtung vordersten Fördergutträger zu blockieren bzw. unter Zurückhaltung nachfolgender Fördergutträger aus der Blockade freizugeben.

Eine Separatoreinrichtung der vorstehend genannten Art ist z. B. aus der DE 196 81 063 C1 bekannt. Sie ist Komponente einer Hängefördereinrichtung zum Transport von Fördergutträgern längs einer betreffenden Förderstrecke, wobei die Fördergutträger Laufrollen aufweisen und mit jeweils einer Laufrolle einseitig an einer Führungsschiene hängend an dieser bewegbar geführt sind. Als Antriebsmittel für die Fördergutträger ist ein längs der Führungsschiene geführt bewegtes Reibband vorgesehen, das mit Reibflächen der an der Schiene hängenden Fördergutträger reibschlüssig in Kontakt steht, so dass vermittels der Reibschlusskopplung die Fördergutträger von dem Reibband längs der Führungsschiene mitgenommen werden. Die Fördergutträger können durch Barriereelemente blockiert und somit bei weiterlaufendem Reibband an ihrer Bewegung gehindert werden, etwa um eine Gruppe von Fördergutträgern in einer Fördergutträger-Sammelstelle zu stauen. Die Fördergutträger können sog. Power-and-Free-Freischaltmittel aufweisen, mit denen ein jeweils nachfolgender Fördergutträger von dem im Stau vorausgehenden Fördergutträger von dem Reibbandantrieb freigeschaltet wird. Sobald ein betreffender Fördergutträger wieder freie Fahrt hat, kommt er mit seiner Reibfläche wieder in reibschlüssigen Kontakt mit dem Reibband und wird somit weitertransportiert. Insbesondere im Zusammenhang mit Sortieraufgaben ist es häufig erforderlich, die in einer Fördergutträger-Sammelstelle gestauten Fördergutträger einzeln zur Bewegung längs der Förderstrecke freizugeben, um hinreichend große Abstände zwischen den aufeinander folgend weiterbewegten Fördergutträgern zu erzeugen. Zu diesem Zweck dient die Separatoreinrichtung. Die Separatoreinrichtung gemäß der DE 196 81 063 C1 umfasst sechs mittels einer Kurbeleinrichtung auf einer Kreisbahn bewegte und dabei parallel zueinander gehaltene Barriereelemente in Gestalt von Haltefingern. Aufgrund der Kurbelbewegung kommen jeweils zwei Haltefinger gleichzeitig zum Einsatz, um einen jeweiligen in der Fördergutträger-Sammelstelle in Förderrichtung vordersten Fördergutträger zu blockieren und danach unter Zurückhaltung nachfolgender Fördergutträger aus der Blockade freizugeben. Die bekannte Separatoreinrichtung ist vergleichsweise aufwendig aufgebaut.

Aufgabe der vorliegenden Erfindung ist es, eine Separatoreinrichtung der eingangs genannten Art bereitzustellen, welche einen einfachen Aufbau hat und zuverlässig funktioniert.

Zur Lösung dieser Aufgabe wird ausgehend von einer gattungsgemäßen Separatoreinrichtung vorgeschlagen, dass die Separatoreinrichtung zwei Barriereelemente aufweist, die in ihren Bewegungen mittels einer Kulissenanordnung gesteuert sind, die ein quer zur Bewegungsrichtung der Barriereelemente geführt hin- und herbewegbares Antriebselement, zwei Kulissenbahnen als Steuerkurven und ein jeweiliges an einer betreffenden Kulissenbahn laufendes Kulisseneingriffselement aufweist, wobei je eine Kulissenbahn und ein Kulisseneingriffselement einem jeweiligen Barriereelement zu dessen Antrieb zugeordnet sind, wobei die Kulissenbahn eines Kulissenbahn-Kulisseneingriffselement-Paares entweder an dem Antriebselement oder an dem Barriereelement vorhanden ist, wohingegen das Kulisseneingriffselement an dem jeweils anderen der Gegenstände Antriebselement und Barriereelement vorhanden ist, so dass die Barriereelemente bei der Hin-und Herbewegung des Antriebselements aufgrund der Wechselwirkung zwischen den Kulisseneingriffselementen und den Kulissenbahnen zu Hin-und Herbewegungen quer zur Bewegungsrichtung des Antriebselementes gezwungen werden.

Ein wesentlicher Vorteil der erfindungsgemäßen Separatoreinrichtung liegt darin, dass die Anzahl der zu bewegenden Elemente gering ist und die Bewegungsabläufe auf einfachen hin- und hergehenden Hubbewegungen des Antriebselementes und der Barriereelemente basieren, wobei die gewünschten Bewegungsprofile der Barriereelemente durch die Verläufe der Kulissenbahnen und durch das Bewegungsprofil des Antriebselementes bestimmt bzw. vorgebbar sind.

Vorzugsweise sind die Kulissenbahnen gegenläufig ausgebildet, so dass die Barriereelemente bei der Bewegung des Antriebselementes zu gegenläufigen Hin- und Herbewegungen gezwungen werden.

Aufgrund der gegenläufigen Bewegungen der vorzugsweise in einem dem Platzbedarf eines Fördergutträgers angepassten Abstand längs der Förderstrecke voneinander angeordneten Barriereelemente kann der Vereinzelungsbetrieb von Fördergutträgern an einer Fördergutträger-Sammelstelle in der Weise ablaufen, dass durch Zurückziehen des in Förderrichtung vorderen und die Gruppe von Fördergutträgern blockierenden ersten Barriereelementes und gleichzeitiges Vorschieben des in Förderrichtung hinteren zweiten Barriereelementes der vorlaufende Fördergutträger freikommt und die übrigen Fördergutträger von dem zweiten Barriereelement zurückgehalten werden. Unmittelbar auf das Entfernen des freigegebenen Fördergutträgers aus der Sammelstelle kommt das erste Barriereelement wieder in die vorgeschobene Blockierstellung und das zweite Barriereelement in die Rückzugsstellung, so dass die Fördergutträger bis zu dem ersten Barriereelement vorrücken können. Durch erneutes Hin- und Herbewegen der Barriereelemente wird dann der nächste Fördergutträger einzeln freigegeben.

Gemäß einer bevorzugten Ausführungsform der Erfindung sind die Kulissenbahnen so gestaltet, dass ein vollständiger Bewegungshub des Antriebselementes wenigstens eine Hin- und Herbewegung jedes der Barriereelemente zur Folge hat. Die Separatoreinrichtung erlaubt damit ein sehr schnelles Separieren von Fördergutträgern, da aufgrund der Übersetzung durch die Kulissenanordnung jeder Einzelhub des Antriebselementes zu einem Hin- und Her-Doppelhub jedes Barriereelementes führt.

Vorzugsweise sind die Kulissenbahnen an dem Antriebselement - und die Kulisseneingriffselemente an den Barriereelementen vorgesehen. Eine solche Konstruktion verringert den Bauaufwand und lässt sich platzsparend realisieren, wobei das Antriebselement vorzugsweise einen Platten-Grundkörper aufweist, der an seinen entgegengesetzten Plattenflächenseiten mit den Kulissenbahnen versehen ist, wobei die an den Barriereelementen angeordneten und in die Kulissenbahnen eingreifenden Kulisseneingriffselemente gemäß einer Weiterbildung der Erfindung einen jeweiligen Rollenkörper aufweisen, der an der zugeordneten Kulissenbahn abrollen kann.

Vorzugsweise hat die Separatoreinrichtung nach der Erfindung einen Gehäuseblock, in dem die Barriereelemente und das Antriebselement an jeweiligen Führungsbahnen bewegbar geführt sind, wobei die Führungsbahnen der Barriereelemente zumindest annähernd parallel zueinander verlaufen und die Führungsbahnen des Antriebselementes zwischen den Führungsbahnen der Barriereelemente und quer, insbesondere orthogonal dazu verläuft. Ein solcher Gehäuseblock kann sehr kompakt ausgebildet sein und erlaubt eine zuverlässige Lagerung und Führung der Barriereelemente und des Antriebselementes.

Gemäß einer bevorzugten Ausführungsform der Erfindung ist die Separatoreinrichtung modular aufgebaut, wobei insbesondere die Barriereelemente oder/und das Antriebselement bedarfsweise auswechselbar gegen ein jeweiliges gleiches oder abgeändertes Barriereelement bzw. Antriebselement in Führungen eines betreffenden Gehäuseblockes aufgenommen sind. Auch die Antriebsquelle für das Antriebselement kann als wahlweise auswechselbares Element ausgestaltet sein. Die Separatoreinrichtung kann somit auf einem Baukastenprinzip beruhen, wobei je nach gewünschter Funktionalität die austauschbaren Komponenten zu einer Gesamtbaugruppe zusammengesetzt werden. So kann z. B. durch Austausch des Antriebselementes ein Antriebselement mit abgeänderten Kulissenbahnen zum Einsatz kommen, um das Bewegungsprofil der Barriereelemente, also deren Geschwindigkeit in Abhängigkeit von ihrer Hublage, in einer gewünschten Weise abzuändern. Auch kann es vorgesehen sein, dass der Monteur unterschiedliche Barriereelemente zur Auswahl hat, etwa um deren wirksamen Abstand längs der Förderstrecke bestimmten Abmessungen von Fördergutträgern anzupassen.

Was die Kulissenbahnen anbetrifft, so könnten sie in einem sehr einfachen Fall als Schrägschlitze in Bezug auf die Längs- und Bewegungsrichtung des Antriebselementes in diesem ausgebildet sein. Ein vollständiger Einzelhub des Antriebselementes hätte dann einen jeweiligen vollständigen Einzelhub jedes Barriereelementes zur Folge. Falls diese so geformten Kulissenbahnen einander gegenläufig ausgebildet sind, so wären dann auch die Hübe der Barriereelemente gegenläufig.

Zur Realisierung der oben schon angesprochenen Variante mit Kulissenbahnen, die einen Einzelhub des Antriebselementes in einen Hin- und Her-Hub jedes Barriereelementes übersetzen, wird vorgeschlagen, dass die Kulissenbahnen zumindest näherungsweise V-förmige Gestalt haben, wobei die V-Spitze der einen Kulissenbahn entgegengesetzt zur V-Spitze der anderen Kulissenbahn in Richtung parallel zu den Führungsbahnen der Barriereelemente orientiert ist. Ein solcher Verlauf der Kulissenbahnen ermöglicht die Übersetzung eines einfachen Hubes des Antriebselementes in einen hin-und hergehenden Doppelhub jedes Barriereelementes, wobei sichergestellt ist, dass die Barriereelemente gegenläufig hin- und herbewegt werden.

Gemäß, einer Variante der Erfindung ist die Antriebsquelle für das Antriebselement so steuerbar, dass letzteres bei Bedarf nur einen Teilhub zwischen Start und Stopp oder zwischen Bewegungsumkehrpunkten anstelle des durchgängigen maximal möglichen Vollhubes ausführt. Auf diese Weise kann erreicht werden, dass die Kulisseneingriffselemente nur einen jeweiligen Teil der Kulissenbahnen bei der Bewegung des Antriebselementes durchlaufen, wenn dies für einen entsprechenden Betriebsmodus der Separatoreinrichtung gewünscht ist.

Vorzugsweise hat die Separatoreinrichtung eine elektronische Steuereinrichtung für die Antriebsquelle des Antriebselementes, wobei die Steuereinrichtung wenigstens einen Sensor oder/und Scanner umfasst, die zur Erfassung von Fördergutträgern dienen, die sich der Separatoreinrichtung annähern oder ggf. in deren Bereich aufhalten. Bei solchen Sensoren kann es sich um Näherungssensoren diverser Funktionsprinzipien oder Bildsensoren zur bildverarbeitenden Erfassung der Fördergutträger handeln. Abhängig von den Daten eines solchen Sensors kann die Bewegung des Antriebselementes gesteuert werden, um einen dem gewünschten Förderfluss entsprechenden Separatorbetrieb durchzuführen. Dabei kann die Steuerung insbesondere so eingerichtet und programmiert sein, dass Fördergutträger unterschiedlicher Abmessungen und unterschiedlicher Bauformen im Förderbetrieb mittels der Separatoreinrichtung bestimmungsgemäß separiert werden können. Scanner können vorgesehen sein, um individualisierende Markierungen der Fördergutträger zu lesen und die entsprechenden Daten der Steuereinrichtung zuzuführen. Solche individualisierende Markierungen können z. B. Barcode-Markierungen an den Fördergutträgern sein. Es kommen aber auch alternative bzw. äquivalente Erkennungsverfahren in Frage, etwa Transpondersysteme, um Fördergutträger im Förderbetrieb zu identifizieren. Die genannten Sensoren bzw. Scannerelemente können im Rahmen eines Baukastensystems ebenfalls Modulelemente der Separatoreinrichtung sein und an vorpräparierten Montageplätzen der Separatoreinrichtung zu montieren sein. Hier empfiehlt sich eine "schwimmende" Lagerung der Sensoren bzw. Scanner, die den Einfluss etwaiger mechanischer Stöße von Fördergutträgern mindern. Solche Sensoren können benutzt werden, um Separatorfunktionen zu aktivieren, etwa bei Fördergutträgern mit mehreren Abstützungspunkten an einer Führungsschiene der Fördereinrichtung oder bei Mischbetrieb der Fördereinrichtung mit unterschiedlichen Fördergutträgem. Die genannten Scanner dienen insbesondere dazu, den Informations- und Datenfluss mit dem physikalischen Warenstrom zu verknüpfen.

Die Barriereelemente haben vorzugsweise Stangenform ggf. mit seitlichem Versatz zur Abstandsanpassung.

Als Antriebsquelle für das Antriebselement kommt insbesondere ein Pneumatikzylinder oder ein Hydraulikzylinder oder ein Elektromagnet oder ein Elektromotor in Frage.

Gegenstand der Erfindung ist ferner eine Hängefördereinrichtung zum Transport von Fördergutträgern längs einer Förderstrecke, wobei die Fördergutträger an Führungsschienen hängend bewegbar sind. Die Hängefördereinrichtung ist durch eine Separatoreinrichtung nach der Erfindung gekennzeichnet. Vorzugsweise ist die Separatoreinrichtung mittels einer Halterungsanordnung so an einer Fördergutträger-Sammelstelle installiert, dass die Barriereelemente auf einer zumindest annähernd horizontalen gemeinsamen Ebene liegen.

Ein Ausführungsbeispiel der Erfindung wird nachstehend unter Bezugnahme auf die Figuren näher erläutert.
- Fig. 1a und Fig. 1b: zeigen in einer Seitenansicht bzw. Rückansicht einen Führungsschienenabschnitt einer Hängefördereinrich- tung und daran geführte Fördergutträger.
- Fig. 2: zeigt eine Separatoreinrichtung nach der Erfindung an einem Führungsschienenabschnitt gemäß Fig. 1a, 1b in einer Vorderansicht, wobei ein Gehäuseblock der Separatoreinrichtung teilweise aufgeschnitten darge- stellt ist.
- Fig. 3a - Fig. 3c: zeigen paarweise eine Seitenansicht und eine Drauf- sicht auf ein Basisteil eines auseinander gebauten Ge- häuseblocks einer Separatoreinrichtung nach der Erfin- dung zur Darstellung der Bewegungszustände der Bar- riereelemente in Abhängigkeit vom Bewegungszustand des Antriebselements.
- Fig. 4a - 4g: zeigen in Draufsicht-Darstellungen des Gehäuseblock- Basisteils aus Fig. 3 eine Sequenz der Vereinzelung aufeinander folgender Fördergutträger mittels einer Se- paratoreinrichtung nach der Erfindung.
- Fig. 5: zeigt ein weiteres Ausführungsbeispiel einer Separator- einrichtung nach der Erfindung in einer perspektivi- schen Ansicht von unten.
- Fig. 6: zeigt das Ausführungsbeispiel gemäß Fig. 5 in einer Vorderansicht.
- Fig. 7: zeigt eine Schnittdarstellung des letztgenannten Aus- führungsbeispiels mit der in Fig. 6 bei VII-VII angedeu- teten Schnittebene.

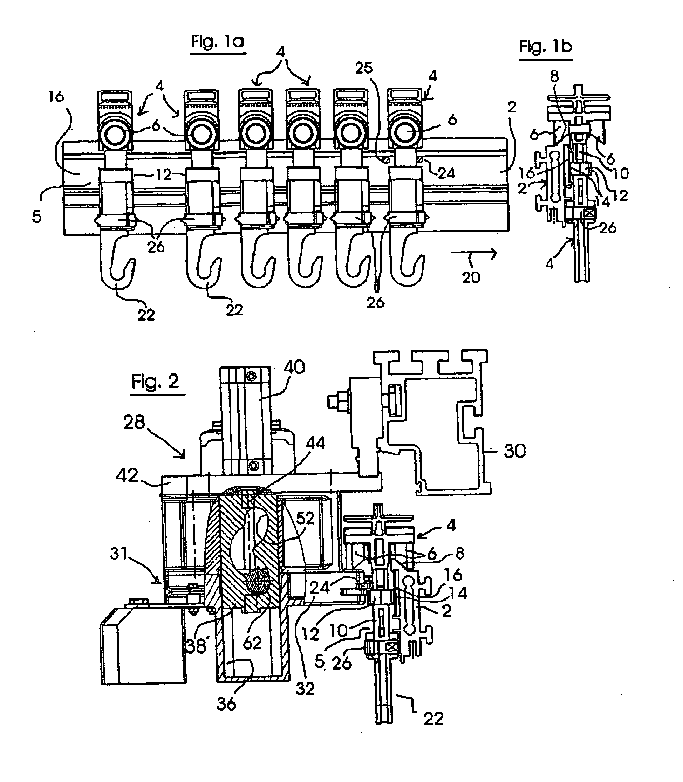

Der in den Figuren 1a und 1b gezeigte Führungsschienenabschnitt 2 repräsentiert einen Ausschnitt aus einer Hängefördereinrichtung, bei welcher Fördergutträger 4 einseitig mit einer konischen Laufrolle 6 eines Laufrollenpaares 6, 6 an der Führungsschiene 2 angehängt sind, wobei die betreffende Laufrolle 6 an einem Laufflächenprofil 8 abrollen kann, das eine zur konischen Form der Laufrolle 6 näherungsweise komplementäre Kontur aufweist.

Die Rollen 6 des Fördergutträgers 4 sind im Wesentlichen symmetrisch in Bezug auf den Basiskörper 10 des Fördergutträgers 4 angeordnet. Unterhalb des Rollenpaares 6, 6 ist an dem Basiskörper 10 ein seitlich verdickter Bereich 12 vorgesehen, welcher Reibflächen 14 aufweist. In-der gezeigten Transportanordnung der Fördergutträger 4 an der Führungsschiene 2 steht die der Führungsschiene 2 jeweils zugewandte Reibfläche 14 mit einem Reibband 16 reibschlüssig in Kontakt, welches längs der Führungsschiene 2 in einer Reibbandführung läuft. Ein solches Reibband 16 ist üblicherweise ein Endlosband, das zum Umlauf um Umlenktrommeln angetrieben wird. Aufgrund der reibschlüssigen Kopplung zwischen Fördergutträger 4 und Reibband 16 kommt es zur Mitnahme der Fördergutträger 4 in Förderrichtung, die in Fig. 1a mit einem Pfeil 20 angedeutet ist. An ihren unteren Enden weisen die Fördergutträger 4 Haken 22 auf, an denen das Fördergut, z. B. Kleiderbügel mit daran hängenden Kleidungsstücken, angehängt werden kann. Der oberhalb des Hakens 22 liegende Teil des Fördergutträgers 4 mit den Elementen 6, 10, 12, 14, 26 wird auch als Laufwerkskörper 5 des Fördergutträgers 4 bezeichnet.

In Fig. 1a ist die Situation gezeigt, dass eine Gruppe von sechs Fördergutträgern 4 eine Sammelstelle erreicht hat, wobei der in Förderrichtung 20 vorderste Fördergutträger 4 von einem Barriereelement 24 bereits am Weitertransport gehindert ist. Die folgenden Fördergutträger werden mit dem vordersten Fördergutträger 4 einen Fördergutträgerstau bilden, sobald sie in Berührung miteinander gekommen sind. Dabei kommen Freischaltmittel 26 aufeinander folgender Fördergutträger 4 miteinander in Eingriff, wodurch es zur Abkopplung der Fördergutträger vom Reibband 16 kommt. Derartige Power-and-Free-Fördergutträgersysteme sind an sich bekannt, z. B. aus der EP 0 623 497 A1 oder der DE 198 16 688 A1.

Eine typische Aufgabe in der Fördertechnik ist es, die an einer Sammelstelle gesammelten Fördergutträger 4 mit ihrem Fördergut zu sortieren. Dies erfolgt dadurch, dass Fördergutträger 4 nach bestimmten Sortierkriterien aus der Hauptförderstrecke mittels Weichen ausgeschleust und in betreffende Sortierzweige überführt werden. Um sicherzustellen, dass jeweils genug Zeit für die Weichenschaltvorgänge zwischen aufeinander folgend der Weiche zugeführten Fördergutträgern herrscht, ist es erforderlich, die an der Sammelstelle gestauten Fördergutträger 4 zum Weitertransport zu betreffenden Weichen zu vereinzeln, so dass definierte Abstände zwischen aufeinander folgenden Fördergutträgern 4 erzeugt werden. Zum Zweck der Vereinzelung der Fördergutträger 4 dient eine Separatoreinrichtung nach der Erfindung.

In Fig. 2 ist ein Ausführungsbeispiel einer erfindungsgemäßen Separatoreinrichtung 28 in ihrer Installationsanordnung an einer Trägerschiene 30 und relativ zur Führungsschiene 2 der Fördereinrichtung dargestellt. Zu erkennen ist in Fig. 2 ein Fördergutträger 4, der von der Separatoreinrichtung 28 zum Weitertransport freigegeben worden ist. In Fig. 2 verläuft die Förderrichtung orthogonal zur Blattebene auf den Betrachter zu.

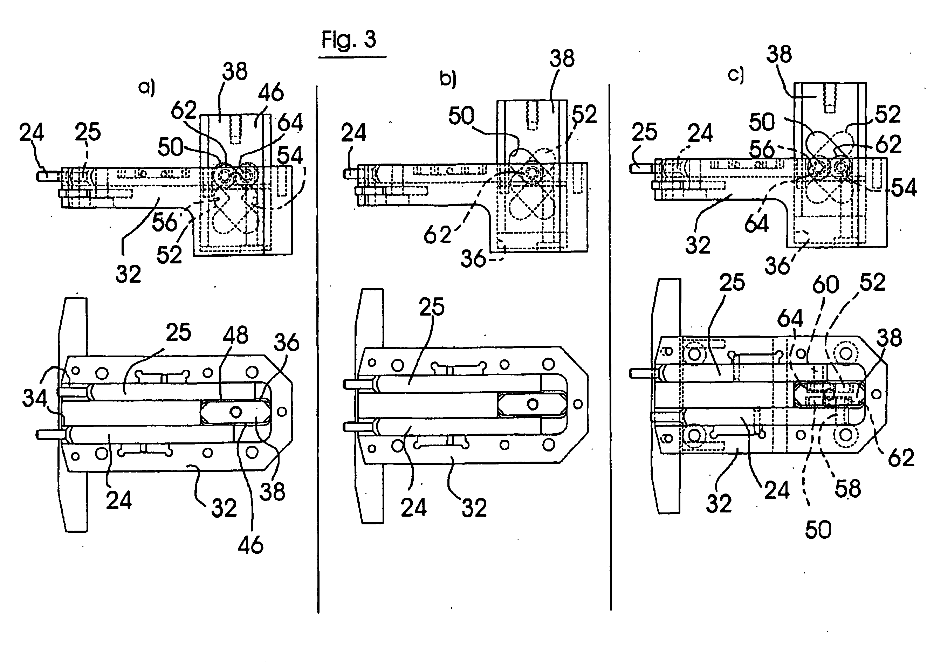

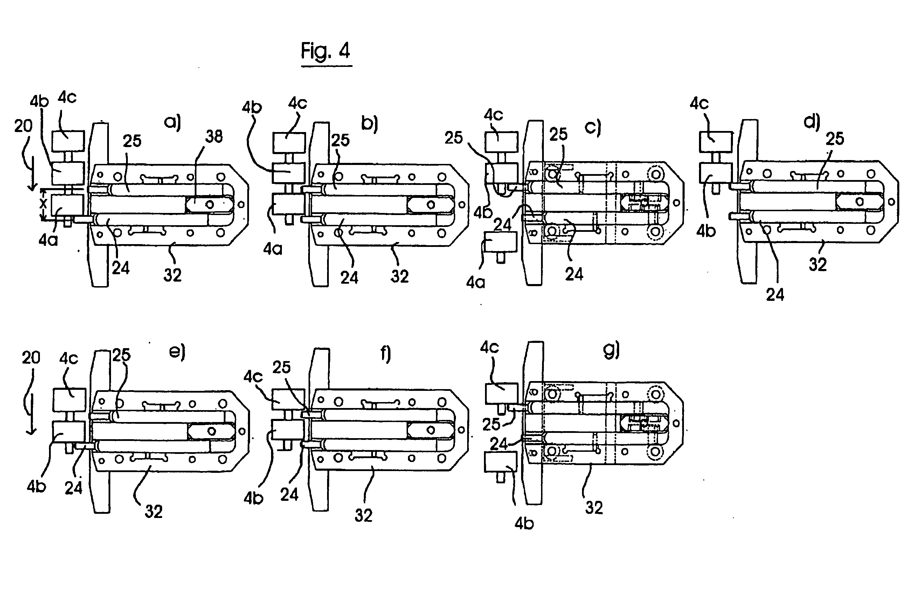

Zum besseren Verständnis der Betriebsweise der Separatoreinrichtung 28 wird im Folgenden zunächst auf die Figuren 3 und 4 Bezug genommen.

In Fig. 3 ist ein Basiselement 32 eines Führungsgehäuseblockes der Separatoreinrichtung 28 in Seitenansicht und in Draufsicht für drei verschiedene Einstellzustände der Separatoreinrichtung gezeigt. Das Gehäuseblock-Basiselement 32 ist in Fig. 3 ohne Deckelteil dargestellt, um die gesteuert bewegten Elemente der Separatoreinrichtung erkennbar zu machen. Dabei handelt es sich um zwei Barriereelemente 24, 25, die in Führungsnuten 34 in einer gemeinsamen horizontalen Ebene parallel zueinander bewegbar geführt sind.

Zwischen den Führungsbahnen 34 der stangenförmigen Barriereelemente 24, 25 verläuft senkrecht dazu ein Führungskanal 36 für ein plattenförmiges Antriebselement 38, welches zur Ausführung von Aufwärts- und Abwärtshüben in der Führung 36 mittels einer Antriebsquelle antreibbar ist. Als eine solche Antriebsquelle ist in Fig. 2 ein Pneumatikzylinder 40 gezeigt, welcher auf einer Deckel- und Halteplatte 42 des Führungsgehäuseblockes 31 angeordnet ist und mit seiner Kolbenstange 44 ein Durchgangsloch in der Deckel-und Halteplatte 42 durchsetzt. Die Kolbenstange 44 ist mit dem Antriebselement 38 an dessen oberem Ende verschraubt.

Wie in den Seitenansichten in Fig. 3 dargestellt ist, weist das Antriebselement 38 an seinen Plattenflächenseiten 46, 48 eine jeweilige darin eingelassene Kulissenbahn 50, 52 auf. Die Kulissenenbahnen 50, 52 bilden im Beispielsfall V-förmige gegenläufige Steuerkurven, wobei die V-Spitze 54 der einen Kulissenbahn 50 entgegengesetzt zur V-Spitze 56 der anderen Kulissenbahn 52 in Richtung parallel zu den Führungsbahnen 34 der Barriereelemente 24, 25 orientiert ist. Die Barriereelemente 24, 25 weisen Lagerstifte 58, 60 mit daran drehbar gelagerten Rollen 62, 64 auf. Die Rollen 62, 64 greifen in die Kulissenbahnen 50, 52 bildenden Ausnehmungen des Antriebselementes 38 ein und können an den betreffenden Steuerkurvenflächen der Kulissenbahnen 50, 52 bei den Hubbewegungen des Antriebselementes 38 abrollen. Die Barriereelemente 24, 25 sind somit in ihren Bewegungen mittels einer Kulissenanordnung gesteuert, die das quer zur Bewegungsrichtung der Barriereelemente 24, 25 auf- und abbewegbare Antriebselement 38, die beiden gegenläufigen Kulissenbahnen 50, 52 und ein jeweiliges an der betreffenden Kulissenbahn 50, 52 laufendes Kulisseneingriffselement in Gestalt einer Rolle 62, 64 aufweist. Aufgrund der Wechselwirkung zwischen den Rollen 62, 64 und den Kulissenbahnen 50, 52 werden die Barriereelemente 24, 25 bei der Auf- und Abbewegung des Antriebselementes 38 zu gegenläufigen Hin- und Herbewegungen gezwungen. Ein vollständiger Bewegungshub des Antriebselementes 38 hat jeweils eine Hin-und Herbewegung jedes der Barriereelemente 24, 25 zur Folge. Im Teil a) der Fig. 3 ist die Situation dargestellt, dass das Antriebselement 38 am untersten Punkt seines Abwärtshubes ist. Die Rollen 62, 64 der Barriereelemente 24, 25 befinden sich dementsprechend im obersten Bereich der ihnen jeweils zugeordneten Kulissenbahn 50, 52, wobei die Rolle 62 des Barriereelementes 24 gleichzeitig auch in ihrer maximal vordersten Stellung ist, wohingegen die Rolle 64 des Barriereelementes 25 in seiner maximal hintersten Stellung ist. In der Draufsichtsdarstellung des Figurenteils a) der Fig. 3 ist erkennbar, dass dementsprechend das Barriereelement 24 vorgeschoben und das Barriereelement 25 zurückgezogen ist.

In dem Figurenteil b) der Fig. 3 ist das Antriebselement 38 um etwa ein Viertel seines Maximalhubs nach oben bewegt worden, wobei die Rollen 64, 62 in der Seitenansicht miteinander fluchten und beide auf halbem Wege zwischen ihrer maximal vordersten Stellung und ihrer maximal hintersten Stellung liegen. Die Draufsichtsdarstellung in dem Figurenteil b) der Fig. 3 zeigt dementsprechend, dass die Barriereelemente 24, 25 einander entsprechende Zwischenstellungen eingenommen haben.

In dem Figurenteil c) der Fig. 3 hat sich das Antriebselement 38 weiter nach oben bewegt und hat die Hälfte seines Maximalhubs in Richtung nach oben erreicht. Die Rollen 62, 64 befinden sich auf halber Höhe der jeweils zugeordneten Kulissenbahn 50, 52 an den V-Spitzen, wobei die Rolle 62 des Barriereelementes 24 gleichzeitig ihre maximal hinterste Stellung eingenommen hat, wohingegen die Rolle 64 des Barriereelementes 25 ihre maximal vorderste Stellung eingenommen hat. Die Draufsicht im Figurenteil c) der Fig. 3 lässt erkennen, dass dementsprechend nun das Barriereelement 25 nach vorn herausgeschoben ist, wohingegen das Barriereelement 24 weitestgehend zurückgezogen ist.

Wird nun das Antriebselement 38 weiter nach oben bewegt, so kommen die Rollen 62, 64 an den untersten Stellen ihrer zugeordneten Kulissenbahnen 50, 52 an (nicht gezeigt), wobei die Rolle 62 des Barriereelementes 24 gleichzeitig wieder ihre vorderste Stellung einnimmt und die Rolle 64 des Barriereelementes 25 wieder in ihrer hintersten Stellung ankommt. Dabei wird das Barriereelement 24 wieder vorgeschoben und das Barriereelement 25 wieder zurückgezogen, wie dies in der Draufsicht des Figurenteils a) der Fig. 3 zu erkennen ist. Ein vollständiger Hub des Antriebselementes 38 hat somit einen jeweiligen Vor- und Zurück-Doppelhub jedes Barriereetementes 24, 25 zur Folge. Wird das Antriebselement dann wieder aus seiner obersten Stellung in seine unterste Stellung bei seinem Abwärtshub bewegt, so wiederholen sich die vorstehend besprochenen Bewegungsabläufe der Barriereelemente 24 und 25, d. h. sie führen wieder einen hin- und hergehenden Doppelhub aus. Auf diese Weise wird mit einfachen Mitteln ein präzises und schnelles Schalten der Barriereelemente 24, 25 für Vereinzelungsvorgänge von Fördergutträgern 4 erreicht. Dies wird in der Sequenz der Fig. 4 im Folgenden näher erläutert. Mit 4a, 4b und 4c sind drei Fördergutträger bezeichnet, die in Fig. 4 nur schematisch durch ein jeweiliges Rechteck mit einem kleinen Abstandshaltepuffer gezeigt sind. Auch ist in Fig. 4 nicht die Führungsschiene dargestellt.

Zu erkennen ist jedoch in der Fig. 4, dass die Barriereelemente 24 und 25 in Förderrichtung 20 in einem den Platzbedarf eines Fördergutträgers angepassten Abstand x voneinander angeordnet sind, so dass die Barriereelemente 24, 25 einen Fördergutträger an zwei entgegengesetzten Seiten zwischen sich aufnehmen können, wie dies z. B. in dem Teil b) der Fig. 4 erkennbar ist.

In der Ausgangssituation gemäß Teil a) der Fig. 4 befindet sich eine Gruppe von Fördergutträgern 4a, 4b und 4c an der betreffenden Sammelstelle. Die Fördergutträger 4a, 4b und 4c bilden einen Stau, da der vorlaufende Fördergutträger 4a durch das Barriereelement 24 am Weitertransport gehindert ist und seinerseits ein Hindernis für die nachfolgenden Fördergutträger 4b, 4c bildet. In der Situation gemäß Teil b) der Fig. 4 ist das Barriereelement 25 bereits so weit vorgeschoben, dass es bei der folgenden Freigabe des Fördergutträgers 4a die weiteren Fördergutträger 4b und 4c an dem Weitertransport blockiert.

In der Situation c) ist nun das Barriereelement 24 vollständig zurückgezogen und das Barriereelement 25 in seine vorderste Stellung vorgeschoben worden. Der Fördergutträger 4a kann somit einzeln in Förderrichtung weiterlaufen.

In der Situation d) befinden sich die Barriereelemente 24, 25 wieder in der Zwischenstellung, um dann entsprechend der Situation e) wieder die Ausgangsstellung einzunehmen. Das Barriereelement 24 blockiert nun den Fördergutträger 4b. In dieser Sequenz a) - e) hat das Antriebselement 38 einen einzigen vollständigen Hub ausgeführt und ist am Umkehrpunkt angelangt, um den Rückhub anzutreten. Dabei kommen die Barriereelemente 24, 25 gemäß Situation f) in Fig. 4 wieder in ihre Zwischenstellung und danach in die Situation g), gemäß welcher das zurückgezogene Barriereelement 24 den Fördergutträger 4b nun einzeln zum Weitertransport freigibt und das vorgeschobene Barriereelement 25 den Fördergutträger 4c zurückhält. Bei Fortsetzung der Sequenz kommt dann schließlich auch der Fördergutträger 4c frei. Die Hubsteuerung des Antriebselementes 38 erfolgt durch entsprechende Ansteuerung des Hubzylinders (vgl. 40 in Fig. 2) mittels einer Steuereinrichtung.

Es sei darauf hingewiesen, dass Fig. 2 eine geringfügig abgewandelte Version des Führungsgehäuseblocks und des Antriebselementes 38' gegenüber den korrespondierenden Elementen in Fig. 3 und Fig. 4 aufweist, wobei jedoch die Funktion und Betriebsweise der Separatoreinrichtung in Fig. 2 der oben unter Bezugnahme auf die Fig. 3 und 4 erläuterten Funktion und Betriebsweise entspricht. Bei dem Antriebselement 38' in Fig. 2 sind die Kulissenbahnen (nur eine ist erkennbar) im Vergleich mit den Kulissenbahnen des Antriebselementes 38 aus Fig. 3 geglättet, wobei insbesondere die V-Spitze zu einer Rundung abgeflacht ist.

Gemäß einer besonders bevorzugten Variante der Erfindung ist das Antriebselement 38 auswechselbar in dem Führungskanal 36 des Führungsgehäuseblockes untergebracht, so dass bei Bedarf ein Antriebselement 38' mit einem anderen Verlauf der Kulissenbahnen 50, 52 und somit der Steuerkurven für die Barriereelemente zum Einsatz kommen kann. Auch die Barriereelemente 24, 25 sind auswechselbare Module. So können statt geradliniger, stangenförmiger Barriereelemente, wie sie in den Fig. 3 und 4 zu erkennen sind, Barriereelemente vorgesehen sein, die an ihren außen liegenden freien Enden einfach oder mehrfach abgewinkelt sind bzw. einen seitlichen Versatz aufweisen, so dass unterschiedlich große wirksame Abstände zwischen den außen liegenden Enden der Barriereelemente gewählt werden können.

Bedarfsweise kann auch eines der Barriereelemente 24, 25 weggelassen werden, falls die Separatoreinrichtung lediglich als Stoppereinrichtung zum Anhalten und Freigeben ganzer Gruppen von Fördergutträgern dienen soll.

Nicht gezeigt sind Fördergutträger-Erkennungssensoren, wie etwa Näherungssensoren oder Bildsensoren zur Aktivierung von Schaltvorgängen der Separatoreinrichtung nach Maßgabe der Fördergutträgererkennung durch die Sensoren. Ebenfalls nicht dargestellt sind etwaige Scannereinrichtungen, wie etwa Barcodeleser oder Transpondersysteme zur Erfassung individueller Markierungen der Fördergutträger.

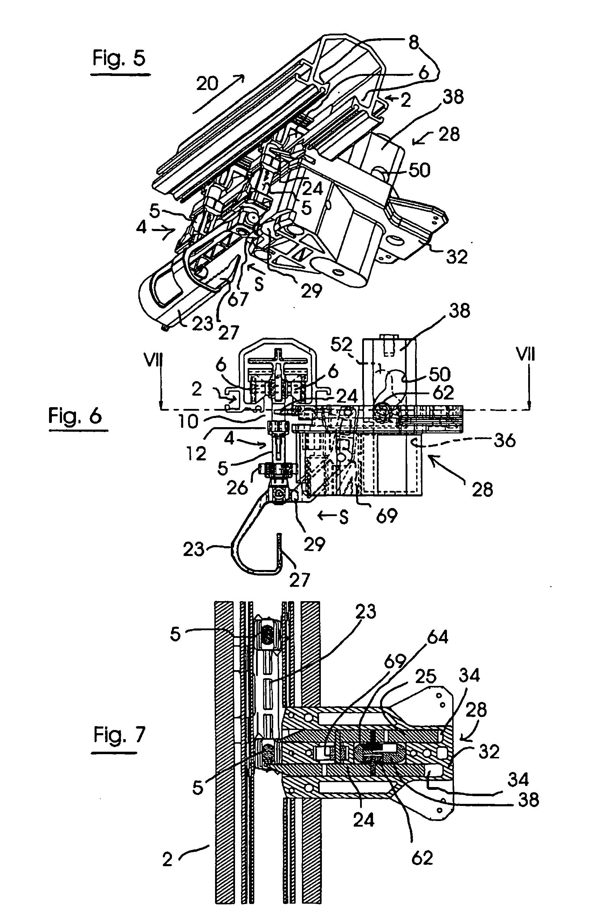

Die Fig. 5 - 7 zeigen ein weiteres Ausführungsbeispiel der Erfindung. Elemente in den Fig. 5 - 7, die gegenständlich oder funktional Elementen in den Fig. 1 - 4 entsprechen, sind mit jeweils gleichen Bezugszeichen gekennzeichnet, so dass zum besseren Verständnis des weiteren Ausführungsbeispiels auch auf die Erläuterungen zu den Fig. 1 - 4 zurückgegriffen werden kann. Die Führungsschiene 2 in den Fig. 5 und 6 ist eine z. B. in Gefällestrecken vorteilhaft zu verwendende Schiene, die sämtliche Laufrollen 6 der Fördergutträger 4 an Laufflächenprofilen 8 abstützt. Im gezeigten Beispielsfall ist ein in etwa symmetrisch aufgebauter Schienenstrang der Schiene 2 in den Fig. 5 und 6 erkennbar, welcher z. B. ein Strangguss-Aluminiumprofil-Bauteil sein kann. Es sei auch für das hier beschriebene weitere Ausführungsbeispiel vorausgesetzt, dass die Schiene 2 in Fig. 5 eine Gefällestrecke repräsentiert, längs welcher die Fördergutträger 4 aufgrund ihrer Schwerekraft nach unten bewegt werden, sofern sie zur Bewegung freigegeben sind. Darauf hinzuweisen ist, dass der Fördergutträger 4 in Fig. 5 - 7 eine andere Ausgestaltung aufweist als der Fördergutträger 4 in den Fig. 1 - 4. Der Fördergutträger 4 in Fig. 5 hat zwei Laufwerkskörper 5, die ähnlich den in Fig. 1 - 2 gezeigten Laufwerkskörpem 5 ausgebildet sind. An ihren unteren Enden sind die beiden Laufwerkskörper 5 des Fördergutträgers 4 in Fig. 5 durch eine Traverse 23 miteinander verbunden, die einen von der Seite S sowie von vom und hinten zugänglichen Anhängabschnitt 27 für eine Vielzahl von Kleiderbügeln aufweist. Derartige Fördergutträger 4 werden auch als Trolleys bezeichnet. Es sei darauf hingewiesen, dass ein solcher Trolley 4 auch an einer Führungsschiene 2 gemäß Fig. 1 und Fig. 2 benutzt werden kann, sowie umgekehrt auch die sog. Einzelbügelträger 4 aus den Fig. 1 und 2 an der Führungsschiene 2 der Fig. 5 benutzt werden können. In den Fig. 5 - 7 ist das Barriereelement 24 der Separatoreinrichtung 28 in der betreffenden Momentaufnahme vorgeschoben, so dass es den Trolley 4 an dessen in Förderrichtung 20 vorlaufenden Laufwerkskörper 5 stoppt. Wie insbesondere aus Fig. 6 zu ersehen ist, sind die Kulissenbahnen 50, 52 so geformt, dass ein vollständiger Hub des Antriebselementes 38 auch nur einen vollständigen Hub der Barriereelemente 24, 25 zur Folge hat. Ferner ist darauf hinzuweisen, dass bei dem hier besprochenen Ausführungsbeispiel ein Zusatzbarriereelement 29 vorgesehen ist, welches im Beispielsfall näherungsweise synchron mit dem Barriereelement 24 zwischen der dargestellten vorgeschobenen Stoppstellung und einer zurückgezogenen Freigabestellung schaltbar ist. In der gezeigten vorgeschobenen Stoppstellung dient das zusätzliche Barriereelement 29 als Anschlag für eine Gegenfläche 67 im unteren Bereich des Trolleys 4. Der Trolley 4 wird somit an zwei Stellen von der Separatoreinrichtung in der Stoppstellung blockiert. Diese Maßnahme stellt sicher, dass auch bei hohem Staudruck z. B. einer größeren Gruppe von beladenen Fördergutträgern 4 auf den im Stau vordersten Fördergutträger 4 hinreichende Haltestabilität gegeben ist. Das zusätzliche Barriereelement 29 ist über einen Schwenkhebelmechanismus 69 mit dem Barriereelement 25 gekoppelt, so dass die Rückzugsbewegung des Barriereelementes 25 ein Nach-vorne-Schwenken des zusätzlichen Barriereelementes 29 zur Folge hat, wohingegen ein Vorschub des Barriereelementes 25 durch den Schwenkhebelmechanismus 69 in eine Rückzugsschwenkbewegung des zusätzlichen Barriereelementes 29 übersetzt wird. Dem Fachmann stehen im Rahmen seines Fachwissens auch noch andere Möglichkeiten der Koppelung eines solchen zusätzlichen Barriereelementes 29 mit einem Barriereelement 24, 25 oder dem Antriebselement 38 zur Verfügung. In den Fig. 5 - 7 ist die Antriebsquelle für das Antriebsmittel 38 nicht dargestellt. Es kann sich jedoch auch in diesem Fall um eine der bereits in Bezug auf das erste Ausführungsbeispiel genannten Antriebsquellen handeln. Ferner sind nicht dargestellt Sensoren und etwaige Scannersysteme sowie Komponenten der elektronischen Steuerung zur Aktivierung der steuerbaren Antriebsquelle des Antriebselementes 38 nach Maßgabe von Sensorinformationen, so dass die Barriereelemente 24, 25, 29 aus dem Weg des Fördergutträgers 4 herausbewegt werden, wenn letzterer die Separatoreinrichtung in Förderrichtung 20 passieren soll bzw. die betreffenden Barriereelemente 24, 29 in der in den Fig. 5 - 7 gezeigten Weise in den Weg der Fördergutträger 4 bewegt werden, um z. B. einen Stau zu bilden. Die Steuereinrichtung sorgt auch dafür, dass die Barriereelemente 24, 25, 29 bei ihrem Vorschub nicht seitlich auf den Fördergutträger 4 aufschlagen.

Die vorstehende Beschreibung der Ausführungsbeispiele hat gezeigt, dass eine Separatoreinrichtung nach der Erfindung mehrfach funktional für vielfältigen Stop-and-go-Betrieb gleicher oder unterschiedlicher Fördergutträger in einer damit ausgestatteten Fördereinrichtung zum Einsatz kommen kann.

Insbesondere das erste Ausführungsbeispiel mit "Doppelhub-Kulissenbahnen 50, 52" eignet sich für einen extrem schnellen Vereinzelungsbetrieb von Fördergutträgern 4 der in den Fig. 1 und 2 gezeigten Art. So wurden in Testläufen Vereinzelungsgeschwindigkeiten von ca. 12.000 Fördergutträgern pro Stunde bei einer Reibbandantriebsgeschwindigkeit von 30 m/min erzielt.

Es sei noch einmal auf die große Flexibilität einer als Baukastensystem realisierten Variante der Separatoreinrichtung nach der Erfindung hingewiesen, insbesondere was die Verwendung unterschiedlicher Kulissenbahnformen an verschiedenen Antriebselementen 38 anbelangt. Die Kulissenbahnen an einem Antriebselement 38 müssen auch nicht unbedingt gegenläufig symmetrisch ausgebildet sein, sondern können je nach Bedarf und gewünschtem Bewegungsprofil der anzutreibenden Barriereelemente gestaltet sein.

Schließlich sei noch auf eine zeichnerisch nicht dargestellte Variante der Separatoreinrichtung bzw. der damit ausgestatteten Hängefördereinrichtung hingewiesen. Diese Variante sieht ein vorzugsweise von einem Barriereelement gesteuertes und insbesondere federnd wirksames Andruckelement vor, welches den in der Separatoreinrichtung in Förderrichtung vorderen Fördergutträger bei dessen Freigabe zum Verlassen der Separatoreinrichtung federnd beaufschlagt und dabei den Fördergutträger mit seiner Reibfläche 14 an das Reibband 16 andrückt. Auf diese Weise wird sichergestellt, dass der Fördergutträger rasch aus einer etwaigen Stoppposition in der Separatoreinrichtung heraus die Separatoreinrichtung in Förderrichtung verlassen kann. Bei dem darauf folgenden Schaltwechsel der Barriereelemente wird das Andruckelement dann wieder passiv geschaltet, um beim schließlich darauf folgenden Schaltwechsel der Barriereelemente wieder in Andruckstellung zu gelangen.

## Patentansprüche

1. Separatoreinrichtung zur Freigabe von Fördergutträgern (4) zur Bewegung längs einer Förderstrecke (20) in einer Fördereinrichtung, in welcher die Fördergutträger (4) an Führungsschienen (2) längs der Förderstrecke (20) geführt sind, umfassend Barriereelemente (24, 25), die in einem Abstand (x) voneinander längs der Förderstrecke (20) nebeneinander angeordnet - und in den Weg der Fördergutträger (4) hinein-und aus dem Weg der Fördergutträger (4) herausbewegbar sind, um den jeweiligen in der Fördergutträger-Sammelstelle in Förderrichtung vordersten Fördergutträger (4) zu blockieren bzw. aus der Blockade freizugeben, **dadurch gekennzeichnet, dass** die Barriereelemente (24, 25) eines Barriereelementepaares in ihren Bewegungen mittels einer Kulissenanordnung gesteuert sind, die ein quer zur Bewegungsrichtung der Barriereelemente (24, 25) geführt hin- und herbewegbares Antriebselement (38), zwei Kulissenbahnen (50, 52) als Steuerkurven und ein jeweiliges an einer betreffenden Kulissenbahn (50, 52) laufendes Kulisseneihgriffselement (62, 64) aufweist, wobei je eine Kulissenbahn (50, 52) und ein Kulisseneingriffselement (62, 64) einem jeweiligen Barriereelement (24, 25) zu dessen Antrieb zugeordnet sind, wobei die Kulissenbahn (50, 52) eines Kulissenbahn-Kulisseneingriffselement-Paares entweder an dem Antriebselement (38) oder an dem Barriereelement (24, 25) vorhanden ist, wohingegen das Kulisseneingriffselement (62, 64) an dem jeweils anderen der Gegenstände Antriebselement (38) und Barriereelement (24, 25) vorhanden ist, so dass die Barriereelemente (24, 25) bei der Hin- und Herbewegung des Antriebselementes (38) aufgrund der Wechselwirkung zwischen den Kulisseneingriffselementen (62, 64) und den Kulissenbahnen (50, 52) zu Hin- und Herbewegungen quer zur Bewegungsrichtung des Antriebselementes (38) gezwungen werden.

2. Separatoreinrichtung nach Anspruch 1, **dadurch gekennzeichnet, dass** die Kulissenbahnen (50, 52) gegenläufig ausgebildet sind, so dass die Barriereelemente (24, 25) bei der Bewegung des Antriebselementes (38) zu gegenläufigen Bewegungen gezwungen werden.

3. Separatoreinrichtung nach Anspruch 1 oder 2, **dadurch gekennzeichnet, dass** die Kulissenbahnen (50, 52) so gestaltet sind, dass ein vollständiger Bewegungshub des Antriebselementes (38) wenigstens eine Hin- und Herbewegung jedes der Barriereelemente (24, 25) zur Folge hat.

4. Separatoreinrichtung nach Anspruch 1, 2 oder 3, **gekennzeichnet durch** einen Gehäuseblock (32), in dem die Barriereelemente (24, 25) und das Antriebselement (38) an jeweiligen Führungsbahnen (34, 36) bewegbar geführt sind, wobei die Führungsbahnen (34) der Barriereelemente (24, 25) zumindest annähernd parallel zueinander verlaufen und die Führungsbahn (36) des Antriebselementes (38) zwischen den Führungsbahnen (34) der Barriereelemente (24, 25) und quer, insbesondere orthogonal, dazu verläuft.

5. Separatoreinrichtung nach einem der vorhergehenden Ansprüche, **dadurch gekennzeichnet, dass** die Barriereelemente (24, 25) oder/und das Antriebselement (38) bedarfsweise auswechselbar gegen ein jeweiliges gleiches oder abgeändertes Barriereelement bzw. Antriebselement in Führungen (34, 36) aufgenommen sind.

6. Separatoreinrichtung nach einem der Ansprüche 1 bis 5, **dadurch gekennzeichnet, dass** die Kulissenbahnen (50, 52) zumindest näherungsweise V-förmige Gestalt haben, wobei die V-Spitze (54) der einen Kulissenbahn (50) entgegengesetzt zur V-Spitze (56) der anderen Kulissenbahn (52) in Richtung parallel zu den Führungsbahnen (34) der Barriereelemente (24, 25) orientiert ist.

7. Separatoreinrichtung nach einem der vorhergehenden Ansprüche, **dadurch gekennzeichnet, dass** die Kulissenbahnen (50, 52) an dem Antriebselement (38) - und die Kulisseneingriffselemente (62, 64) an den Barriereelementen (24, 25) vorgesehen sind.

8. Separatoreinrichtung nach Anspruch 7, **dadurch gekennzeichnet, dass** das Antriebselement (38) einen Plattengrundkörper aufweist, der an seinen entgegengesetzten Plattenflächenseiten (46, 48) die Kulissenbahnen (50, 52) aufweist und dass die an den Barriereelementen (24, 25) angeordneten und in die Kulissenbahnen (50, 52) eingreifenden Kulisseneingriffselemente (62, 64) einen jeweiligen Rollenkörper aufweisen, der an der zugeordneten Kulissenbahn (50, 52) abrollen kann.

9. Separatoreinrichtung nach einem der vorhergehenden Ansprüche, **dadurch gekennzeichnet, dass** als Antriebsquelle für das Antriebselement (38) ein Pneumatikzylinder (40) oder Hydraulikzylinder oder Elektromagnet oder Elektromotor vorgesehen ist.

10. Separatoreinrichtung nach einem der vorhergehenden Ansprüche, **dadurch gekennzeichnet, dass** die Antriebsquelle für das Antriebselement (38) so steuerbar ist, dass letzteres bei Bedarf nur einen Teilhub zwischen Start und Stopp ausführt.

11. Separatoreinrichtung nach einem der vorhergehenden Ansprüche, **gekennzeichnet durch** eine elektronische Steuereinrichtung für die Antriebsquelle (40) des Antriebselementes (38), wobei die Steuereinrichtung wenigstens einen Sensor oder/und Scanner zur Erfassung von Fördergutträgern (4) im Bereich der Separatoreinrichtung umfasst.

12. Separatoreinrichtung nach einem der vorhergehenden Ansprüche, **dadurch gekennzeichnet, dass** die Barriereelemente (24, 25) zumindest näherungsweise Stangenform haben.

13. Hängefördereinrichtung zum Transport von Fördergutträgern längs einer Förderstrecke, wobei die Fördergutträger (4) an Führungsschienen (2) hängend bewegbar sind, **gekennzeichnet durch** eine Separatoreinrichtung (28) nach einem der vorhergehenden Ansprüche.

14. Hängefördereinrichtung nach Anspruch 13, **dadurch gekennzeichnet, dass** die Separatoreinrichtung (28) mittels einer Halterungsanordnung (30, 42) so an der Fördergut-Sammelstelle installiert ist, dass die Barriereelemente (24, 25) auf einer zumindest annähernd horizontalen Ebene liegen.

## Claims

1. Separator device for releasing conveyed item carriers (4) to move along a conveying path (20) in a conveying device, in which the conveyed item carriers (4) are guided on guide rails (2) along the conveying path (20), comprising barrier elements (24, 25), which are arranged adjacent to each other at a distance (x) along the conveying path (20) and can be moved into and out of the path of the conveyed item carriers (4) in order to block the respective front conveyed item carrier (4) in conveying direction at the conveyed item carrier collection point or release the blockage, **characterised in that** the barrier elements (24, 25) of a barrier element pair are controlled in their movement by means of a slide arrangement, which comprises a drive element (38) that can be displaced back and forth transversely to the movement direction of the barrier elements (24, 25), two slide tracks (50, 52) as control cams and a respective slide engagement element (62, 64) running on a corresponding slide track (50, 52), wherein a slide track (50, 52) and a slide engagement element (62, 64) are each assigned to a respective barrier element (24, 25) for the drive thereof, whereby the slide track (50, 52) of a slide track-slide engagement element pair is either provided on the drive element (38) or on the barrier element (24, 25), whereas the slide engagement element (62, 64) is provided on the other objects - drive element (38) and barrier element (24, 25), so that the barrier elements (24, 25) are forced to perform back and forth movements transversely to the movement direction of the drive element (38) during the back and forth movement of the drive element (38) due to the interaction between the slide engagement elements (62, 64) and the slide tracks (50, 52).

2. Separator device according to claim 1, **characterised in that** the slide tracks (50, 52) are designed to be arranged opposite one another in rotation, so that the barrier elements (24, 25) during the movement of the drive element (38) are forced into opposite movements.

3. Separator device according to claim 1 or 2, **characterised in that** the slide tracks (50, 52) are configured so that a complete movement motion of the drive element (38) results in at least one back and forth movement of each of the barrier elements (24, 25).

4. Separator device according to claim 1, 2 or 3, **characterised by** a housing block (32), in which the barrier elements (24, 25) and the drive element (38) are guided to move on respective guide tracks (34, 36), whereby the guide tracks (34) of the barrier elements (24, 25) run at least almost parallel to one another and the guide track (36) of the drive element (38) runs between the guide tracks (34) of the barrier elements (24, 25) and at right angles, in particular orthogonally, thereto.

5. Separator device according to one of the preceding claims, **characterised in that** the barrier elements (24, 25) and/or the drive element (38) are mounted in guides (34, 36) if necessary to be replaceable against a respective identical or modified barrier element or drive element.

6. Separator device according to one of claims 1 to 5, **characterised in that** the slide tracks (50, 52) have at least approximately a V-shape, whereby the V-tip (54) of one slide track (50) is oriented in opposite direction to the V-tip (56) of the other slide track (52) in a direction parallel to the guide tracks (34) of the barrier elements (24, 25).

7. Separator device according to one of the preceding claims, **characterised in that** the slide tracks (50, 52) are provided on the drive element (38) and the slide engagement elements (62, 64) on the barrier elements (24, 25).

8. Separator device according to claim 7, **characterised in that** the drive element (38) comprises a plate basic body, which on its opposite plate surface sides (46, 48) comprises the slide tracks (50, 52), and **in that** the slide engagement elements (62, 64) arranged on the barrier elements (24, 25) and engaging with the slide tracks (50, 52) comprise a respective roller body, which can roll off on the assigned sliding track (50, 52).

9. Separator device according to one of the preceding claims, **characterised in that** as the drive source for the drive element (38) a pneumatic cylinder (40) or hydraulic cylinder or electromagnet or electric motor is provided.

10. Separator device according to one of the preceding claims, **characterised in that** the drive source for the drive element (38) can be controlled so that the latter if necessary only performs a partial motion between start and stop.

11. Separator device according to one of the preceding claims, **characterised by** an electronic control device for the drive source (40) of the drive element (38), whereby the control device comprises at least one sensor and/or scanner for detecting conveyed item carriers (4) in the region of the separator device.

12. Separator device according to one of the preceding claims, **characterised in that** the barrier elements (24, 25) have at least approximately a rod shape.

13. Suspension conveying device for transporting conveyed item carriers along a conveying path, wherein the conveyed item carriers (4) can be moved suspended on guide rails (2), **characterised by** a separator device (28) according to one of the preceding claims.

14. Suspension conveying device according to claim 13, **characterised in that** the separator device (28) is installed by means of a holding arrangement (30, 42) on the conveyed item collection point, so that the barrier elements (24, 25) lie in an at least approximately horizontal plane.

## Revendications

1. Dispositif séparateur pour le déblocage de supports de marchandises à transporter (4) pour le déplacement le long d'un tronçon de transport (20) dans un dispositif de transport, dans lequel les supports de marchandises à transporter (4) sont guidés sur des rails de guidage (2) le long du tronçon de transport (20), comprenant des éléments de barrière (24, 25), qui sont disposés les uns à côté des autres le long du tronçon de transport (20) à une distance (x) les uns les autres et peuvent être déplacés pour entrer dans le trajet des supports de marchandises à transporter (4) ou pour en sortir, afin de bloquer le support de marchandises à transporter (4) concerné le plus en avant dans le sens de transport au point de collecte du support des marchandises à transporter et de le libérer du blocage, **caractérisé en ce que** les éléments de barrière (24, 25) d'un couple d'éléments de barrière sont commandés dans leurs déplacements au moyen d'un dispositif à coulisse, qui présente un élément d'entraînement (38) pouvant être déplacé en faisant des aller et retour, de façon guidée, transversalement au sens de déplacement des éléments de barrière (24, 25), deux voies à coulisse (50, 52) comme cames de commande et un élément d'engagement de coulisse (62, 64) respectif, fonctionnant sur une voie à coulisse (50, 52) concernée, à chaque fois une voie à coulisse (50, 52) et un élément d'engagement de coulisse (62, 64) étant attribués à un élément de barrière (24, 25) respectif pour son entraînement, la voie à coulisse (50, 52) d'un couple d'éléments d'engagement de coulisse pour voie à coulisse étant présente sur l'élément d'entraînement (38) ou sur l'élément de barrière (24, 25), alors que l'élément d'engagement de coulisse (62, 64) est présent sur l'autre des objets élément d'entraînement (38) et élément de barrière (24, 25), de sorte que les éléments de barrière (24, 25) sont contraints d'effectuer des mouvements d'aller et retour transversalement au sens de déplacement de l'élément d'entraînement (38) lors du mouvement d'aller et retour de l'élément d'entraînement (38) en raison de l'interaction entre les éléments d'engagement de coulisse (62, 64), et les voies à coulisse (50, 52).

2. Dispositif séparateur selon la revendication 1, **caractérisé en ce que** les voies à coulisse (50, 52) sont conçues de façon opposée de sorte que les éléments de barrière (24, 25) sont contraints lors du déplacement de l'élément d'entraînement (38) d'effectuer des mouvements opposés.

3. Dispositif séparateur selon la revendication 1 ou 2, **caractérisé en ce que** les voies à coulisse (50, 52) sont conçues de sorte qu'une course de déplacement complète de l'élément d'entraînement (38) entraîne au moins un mouvement aller et retour de chacun des éléments de barrière (24, 25).

4. Dispositif séparateur selon la revendication 1, 2 ou 3, **caractérisé par** un bloc de carter (32), dans lequel les éléments de barrière (24, 25) et l'élément d'entraînement (38) sont guidés de façon mobile sur des voies de guidage (34, 36) respectives, les voies de guidage (34) des éléments de barrière (24, 25) étant agencées au moins approximativement parallèlement entre elles et la voie de guidage (36) de l'élément d'entraînement (38) étant agencée entre les voies de guidage (34) des éléments de barrière (24,25) et transversalement, en particulier perpendiculairement.

5. Dispositif séparateur selon l'une quelconque des revendications précédentes, **caractérisé en ce que** les éléments de barrière (24, 25) et/ou l'élément d'entraînement (38) sont réceptionnés éventuellement de façon amovible contre un élément de barrière ou élément d'entraînement respectif identique ou modifié dans des guides (34, 36).

6. Dispositif séparateur selon l'une quelconque des revendications 1 à 5, **caractérisé en ce que** les voies à coulisse (50, 52) ont une forme au moins approximativement en forme de V, la pointe en V (54) de l'une des voies à coulisse (50) étant orientée dans le sens opposé à la pointe en V (56) de l'autre voie à coulisse (52) dans la direction parallèle aux voies de guidage (34) des éléments de barrière (24, 25).

7. Dispositif séparateur selon l'une quelconque des revendications précédentes, **caractérisé en ce que** les voies à coulisse (50, 52) sont prévues sur l'élément d'entraînement (38) et les éléments d'engagement de coulisse (62, 64) sur les éléments de barrière (24, 25).

8. Dispositif séparateur selon la revendication 7, **caractérisé en ce que** l'élément d'entraînement (38) présente un corps de base de plaque qui présente les voies à coulisse (50, 52) sur ses côtés de surface de plaque (46, 48) opposés et **en ce que** les éléments d'engagement de coulisse (62, 64), disposés sur les éléments de barrière (24, 25) et s'engageant dans les voies à coulisse (50, 52), présentent un corps de galet respectif qui peut rouler sur la voie à coulisse (50, 52) attribuée.

9. Dispositif séparateur selon l'une quelconque des revendications précédentes, **caractérisé en ce qu'**un vérin pneumatique (40) ou un vérin hydraulique ou un électro-aimant ou un moteur électrique est prévu comme source d'entraînement pour l'élément d'entraînement (38).

10. Dispositif séparateur selon l'une quelconque des revendications précédentes, **caractérisé en ce que** la source d'entraînement pour l'élément d'entraînement (38) peut être commandée de façon que celui-ci exécute en cas de besoin uniquement une course partielle entre le démarrage et l'arrêt.

11. Dispositif séparateur selon l'une quelconque des revendications précédentes, **caractérisé par** un dispositif de commande électronique pour la source d'entraînement (40) de l'élément d'entraînement (38), le dispositif de commande comprenant au moins un capteur et/ou scanner pour la saisie de supports de marchandises à transporter (4) dans le secteur du dispositif séparateur.

12. Dispositif séparateur selon l'une quelconque des revendications précédentes, **caractérisé en ce que** les éléments de barrière (24, 25) ont au moins approximativement une forme de barre.

13. Dispositif de transport suspendu pour le transport de supports de marchandises à transporter le long d'un tronçon de transport, les supports de marchandises à transporter (4) pouvant être déplacés de façon suspendue sur des rails de guidage (2), **caractérisé par** un dispositif séparateur (28) selon l'une quelconque des revendications précédentes.

14. Dispositif de transport suspendu selon la revendication 13, **caractérisé en ce que** le dispositif séparateur (28) est installé au moyen d'un dispositif de fixation (30, 42) au point de collecte des marchandises à transporter de telle sorte que les éléments de barrière (24, 25) sont situés sur un plan au moins approximativement horizontal.
